# EUROPEAN PATENT APPLICATION

(11) **EP 3 162 903 A1**
(43) Date of publication of application: **03.05.2017**
(21) Application number: 15306708.7
(22) Date of filing: 26.10.2015
(51) Int. Cl.: C21D 9/40, C21D 1/10, C21D 1/42, C22C 38/18, F16C 33/62, F16C 33/64

(54) **PROCESS OF TREATMENT OF A RING FOR A BEARING AND A BEARING**

(71) Applicant: SKF Aerospace France, 26240 Saint-Vallier (FR)
(72) Inventor: LE JEUNE, Gwénolé, 26210 SAINT-SORLIN-EN-VALLOIRE (FR)
(74) Representative: Dossmann, Gérard

(57) **Abstract**

Process of treatment of a ring for a bearing, having at least a raceway for rolling elements, comprising the following successive steps of applying a stabilization heat treatment (102) to the ring to obtain (3) at least at a predetermined temperature and at least during a predetermined duration and applying a local induction hardening treatment (104) to the raceway to obtain (10), the material of said ring having a composition dedicated to this induction hardening treatment.

Bearing having a ring being made of a nitrogen steel grade and a raceway of this ring being hardened by local induction hardening.

## Description

The present invention relates to the field of bearings.

More particularly, the present invention concerns the manufacturing of rings for bearings, in particular outer rings of bearings.

It is known to propose outer rings for bearings, having at least a spherical inner raceway and provided with a peripheral collar for fixation on reception supports. Today, these outer rings are made of steel grades able to undergo case-hardening treatments on the raceway, leaving the remaining material of the ring in a ductile condition resistant to fracture.

Nevertheless, case-hardening steel grades, such as made of 16NCD13 or of Z15CN17-03, with thermochemical treatment (carburizing), are not corrosion resistant and a supplementary anti-corrosion treatment is needed, for example a cadmium plating.

An object of the present invention is to avoid the above-mentioned inconvenient.

According to one embodiment, it is proposed a process of treatment of a ring for a bearing, having at least a raceway for rolling elements.

The process comprises the following successive steps of applying a stabilization heat treatment to the ring to obtain at least at a predetermined temperature and at least during a predetermined duration and applying a local induction hardening treatment to the raceway to obtain, the material of said ring having a composition dedicated to this induction hardening treatment.

Said local induction hardening treatment can be obtained by means of at least one inductance placed in front of the raceway to obtain.

The process can comprise a step of applying a machining operation to an initial ring to realize the raceway to obtain.

The process can comprise a step of applying a machining operation to the raceway to obtain between the stabilization heat treatment of the ring and the local induction hardening treatment of the raceway.

The process can comprise a step of applying a finishing machining operation to the raceway after the local induction hardening treatment.

The material of said ring can be made of a steel grade resistant to corrosion.

The material of said ring can be made of a nitrogen steel grade.

The material of said ring can be a steel grade made of X40CrMoVN16-2 or X105CrMo17.

The process can comprise a step of applying an anti-corrosion treatment on the surfaces of the ring other than said raceway.

Said ring can be an outer ring for a bearing and at least a raceway is an inner raceway of this outer ring.

Said inner raceway of said outer ring can be spherical.

It is also proposed a bearing comprising two rings and at least a row of rolling elements interposed between raceways of the rings; at least one of said ring being made of a nitrogen steel grade and the raceway of this ring being hardened by local induction hardening.

Said at least one ring of the bearing can be an outer ring having at least an inner raceway.

Said at least one ring of the bearing can comprise a mounting collar.

Said inner raceway of said outer ring of the bearing can be spherical.

Bearings and manufacturing modes according to the invention will be now described as non-limiting examples, illustrated by the appended drawings on which:
- Figure 1 is a radial cross-section of a bearing ;
- Figure 2 is a diagram of a manufacturing mode of the outer ring of the bearing of figure 1 ;
- Figure 3 is a cross-section of the outer ring of the bearing of figure 1, with an inductance means ;
- Figure 4 is a radial cross-section of another bearing ; and
- Figure 5 is a cross-section of the outer ring of the bearing of figure 4, with an inductance means ;

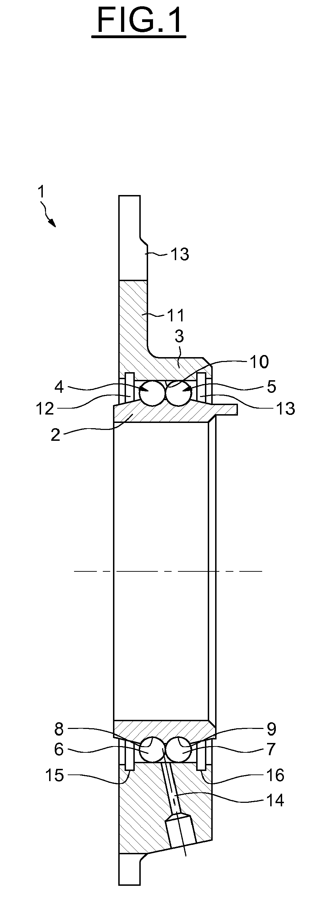

As illustrated on the figure 1, a bearing 1 comprises an inner ring 2, an outer ring 3 and two annular rows 4 and 5 of rolling elements as balls 6 and 7 interposed therebetween and axially spaced apart.

The rolling elements 6 and 7 of the rows 4 and 5 cooperate with concave outer raceways 8 and 9 of the inner ring 2, which are axially spaced apart and oriented radially outwardly.

The rolling elements 6 and 7 of the rows 4 and 5 cooperate with a single concave spherical inner raceway 10 of the outer ring 3, oriented radially inwardly, along annular contact lines which are axially spaced apart.

The outer ring 3 comprises a peripheral collar 11 which will be used for mounting this outer ring 3 on a receiving support (not shown). The collar 11 has a radial mounting surface 12 and axial mounting holes 13. The outer ring 3 has also a lubricating hole 14.

The bearing 1 comprises further annular sealing joints 12 and 13 interposed between the inner ring 2 and the outer ring 3 and located axially on either side of the space where the rows 4 and 5 of roller elements 6 and 7 are located. The outer ring 3 has inner annular grooves 15 and 16 in which the sealing joints 12 and 13 are engaged.

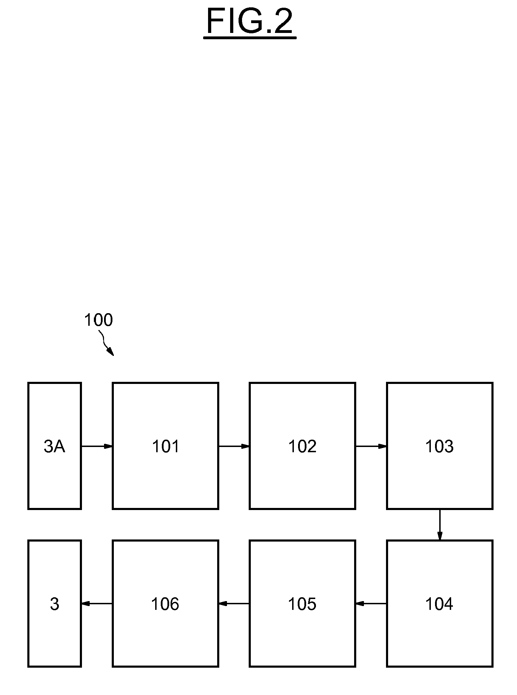

Referring to the process diagram 100 illustrated on the figure 2, it will be now described successive steps permitting to obtain the outer ring 3, from an initial or gross ring 3A (schematically) which has to be machined and treated.

The material of the ring 3A has a composition dedicated to induction hardening treatment. This material of this ring can be made of a nitrogen steel grade. Preferably, the steel grade can be chosen in order to be resistant to corrosion.

For example, the material of the gross ring 3A can be a steel grade made of X40CrMoVN16-2 or X105CrMo17, these materials being able to undergo an induction hardening treatment and being resistant to corrosion such as oxidation.

In a first step 101, a principle machining operation is applied to the gross ring 3A, for example by turning or milling, to realize a raceway with a shape and dimensions equal or close to the shape and dimensions of the inner raceway 10 to obtain.

In the same time, the mounting surface 12, the holes 13 and the annular inner grooves 15 and 16 can be machined.

In a following step 102, the gross ring 3A is submitted to a stabilization heat treatment, in all its volume. For this, the ring 3A is placed in an oven, at a predetermined temperature and during a predetermined duration. An object of this heat treatment is to reduce the internal stresses of the material of the ring 3A and obtain a relaxation of the material by reduction of internal constraints.

In a following step 103, optionally, a secondary machining operation is applied to the raceway previously obtained, for example by turning or milling, in order to reduce or remove the deformation of this raceway due to the heat treatment previously applied and obtain a raceway with a shape and dimensions equal or close to the shape and dimensions of the inner raceway 10 to obtain.

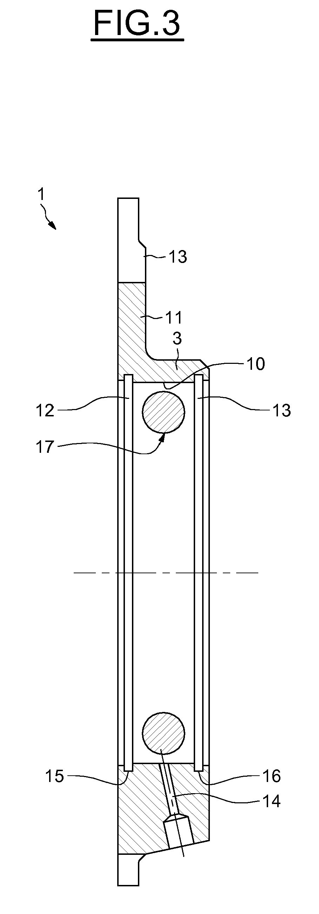

In a following step 104, a local induction hardening treatment is applied to the raceway previously obtained. For this, as illustrated on the figure 3, an annular inductance 17 is placed into the outer ring 3A, at a distance from the inner raceway 10 to obtain. This inductance 17 is able to produce a high frequency acting in the material of the outer ring 3A, adjacent to the inner raceway 10 to obtain, and permitting to induce an induction hardening of a superficial layer of the raceway.

In a following step 105, a finishing machining operation, such as a grinding operation, is applied to the inner raceway 10 to obtain.

After that and finally, the outer ring 3 is obtained, with the desired raceway 10.

Nevertheless, in a following step 106, optionally and only if the bearing 1 has to be used in a very highly corrosive atmosphere, an anti-corrosion treatment can be applied on the surfaces of the outer ring 3 other than the inner raceway 10. This treatment can be a cadmium plating operation. It will be noted that, in using, the space in which the ball rows 4 and 5 are located between the sealing joints 12 and 13 is protect by the lubricant introduced by the hole 14.

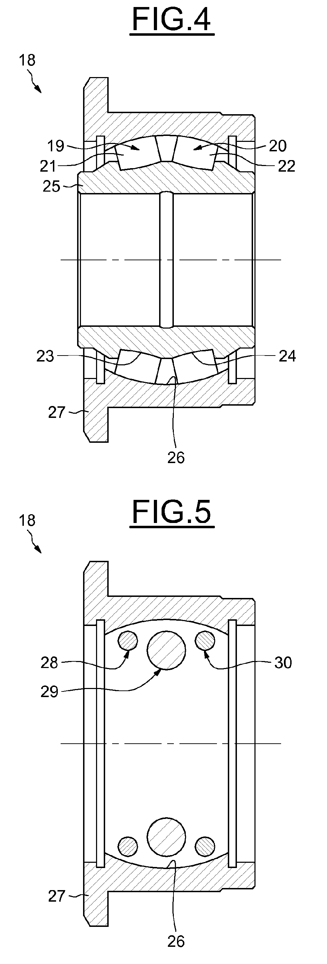

Another bearing 18, having to be obtained by a process equivalent to the process above-described in reference to the diagram of the figure 2, is illustrated in the figure 4.

This bearing 18 defers from the bearing 1 by the fact that the ball rows are replaced by two annular rows 19 and 20 of concave rollers 21 and 22, which are axially spaced apart and cooperate with axially spaced apart raceways 23 and 24 of an inner ring 25 and with a single inner concave spherical raceway 26 of an outer ring 27.

The axial dimension of the inner raceway 26 of the outer ring is increased with respect to the inner raceway 10 of the outer ring 3 of the bearing 1.

In this case, as illustrated on the figure 5, the inductance means, used to achieve the local induction hardening treatment in the step 104 above-described, comprise three annular inductances 28, 29 and 30 placed into the outer ring 3A, at a distance from the inner raceway 26 to obtain. The inductances 28, 29 and 30 are axially spaced apart in front of the inner raceway 26 and allocated in order to obtain a homogenous hardening layer in all the surface of the raceway 26.

The present invention allows to keep the outer ring resisting to structural fatigue, while the hardened inner raceway thereof resists to rolling contact fatigue. External surfaces of the outer ring can remain free of anti-corrosion surface treatment due to steel composition.

The steel grade and the manufacturing process, used prior to surface induction-hardening, dictate the properties in the unaffected areas, which means that a combination of properties can be achieved in one ring component.

Induction-hardening, used on specific stainless steels, doesn't need any supplementary treatment to resist to current corrosion.

Finally, the invention represents a less expensive solution.

The bearing resulting of the present invention can be used particularly in aircraft field.

Although described in reference to an outer ring with one rolling raceway, the present invention could be applied to an outer ring having several raceways, or to an inner ring having one raceway or several raceways or to at least a ring of a thrust bearing.

## Claims

1. Process of treatment of a ring for a bearing, having at least a raceway for rolling elements, comprising the following successive steps of :
applying a stabilization heat treatment (102) to the ring to obtain (3) at least at a predetermined temperature and at least during a predetermined duration ; and
applying a local induction hardening treatment (104) to the raceway to obtain (10), the material of said ring having a composition dedicated to this induction hardening treatment.

2. Process according to claim 1, in which said local induction hardening treatment (104) is obtained by means of at least one inductance placed in front of the raceway to obtain.

3. Process according to one of the claims 1 and 2, comprising a step of applying a machining operation to an initial ring (3A) to realize the raceway to obtain (10).

4. Process according to one of the preceding claims, comprising a step of applying a machining operation (103) to the raceway to obtain (10) between the stabilization heat treatment of the ring and the local induction hardening treatment of the raceway.

5. Process according to anyone of the preceding claims, comprising a step of applying a finishing machining operation to the raceway (105) after the local induction hardening treatment (104).

6. Process according to anyone of the preceding claims, in which the material of said ring is made of a steel grade resistant to corrosion.

7. Process according to anyone of the preceding claims, in which the material of said ring is made of a nitrogen steel grade.

8. Process according to anyone of the preceding claims, in which the material of said ring is a steel grade made of X40CrMoVN16-2 or X105CrMo17.

9. Process according to anyone of the preceding claims, comprising the step of applying an anti-corrosion treatment on the surfaces of the ring other than said raceway.

10. Process according to anyone of the preceding claims, in which said ring is an outer ring for a bearing and at least a raceway is an inner raceway of this outer ring.

11. Process according to claim 10, in which said inner raceway of said outer ring is spherical.

12. Bearing comprising two rings (2, 3) and at least a row of rolling elements interposed between raceways of the rings ; at least one of said ring being made of a nitrogen steel grade and the raceway of this ring being hardened by local induction hardening.

13. Bearing according to claim 12, in which said at least one ring is an outer ring (3) having at least an inner raceway.

14. Bearing according to claim 12 or 13, in which said at least one ring comprises a mounting collar (11).

15. Bearing according to one of the preceding claims 12 to 14, in which said raceway of said at least one ring is spherical.
